# FASCICULE DE BREVET EUROPEEN

(11) **EP 3 576 586 B1**
(45) Date de publication et mention de la délivrance du brevet: **03.03.2021**
(21) Numéro de dépôt: 18705711.2
(22) Date de dépôt: 02.02.2018
(51) Int. Cl.: A47J 27/08, A47J 27/62

(54) **CUISEUR À ENCEINTE D'ANALYSE**
KOCHER MIT ANALYSEKAMMER
COOKER WITH ANALYSIS CHAMBER

(30) Priorité: 03.02.2017 FR 1750953
(43) Date de publication de la demande: 11.12.2019
(73) Titulaire: SEB S.A., 69130 Ecully (FR)
(72) Inventeur: VOLATIER, Sébastien, 21000 Dijon (FR); GOYON, Annabelle, 21120 Marcilly-Sur-Tille (FR)
(74) Mandataire: SEB Développement
(86) Numéro de dépôt international: PCT/FR2018/050269
(87) Numéro de publication internationale: WO 2018/142087

(56) Documents cités:
- WO-A1-2012/056173
- WO-A2-2012/018965
- US-A- 6 028 297

## Description

La présente invention les appareils de petit électroménager permettant de cuire des céréales et légumineuses, en particulier du riz, encore appelés « cuiseurs ».

On connaît de nombreux modèles de cuiseurs.

La publication WO 2012/056173 A1 décrit un exemple de cuiseur à riz.

Le brevet US 6 028 297 divulgue un cuiseur de riz capable de réduire la puissance de chauffage lors de la détection d'un débordement de porridge de riz (« *rice gruel* ») dans l'enceinte, du fait de la mousse que produit le riz en cuisant. Le cuiseur comporte un flotteur dans le couvercle susceptible d'être déplacé lors du débordement.

La demande WO 2012/018965 divulgue un dispositif comportant un contenant principal et des contenants d'entrée et de sortie de liquide pour alimenter le contenant principal et recevoir des déchets provenant de celui-ci.

Il existe plusieurs types de riz, par exemple riz blanc, riz brun, riz noir ou riz rouge, et chaque type de riz se décline en plusieurs variétés.

La majorité des cuiseurs comportent des programmes de cuisson adaptés aux différents types de riz, notamment riz blanc ou riz brun. Certains cuiseurs à riz présentent des programmes spécialisés pour la cuisson d'une variété de riz en particulier, comme celles du Nord-Est de la Chine, Basmati ou Thaï.

Il existe aussi des cuiseurs à riz dont l'interface permet au consommateur de sélectionner le format du grain de riz introduit dans la cuve avant cuisson, à savoir long ou rond.

La cinétique de cuisson optimale pour une variété de riz dépend du comportement de celle-ci à la cuisson. Ce dernier se traduit en particulier par la rapidité de gonflement du grain de riz suite à la gélatinisation de l'amidon, en fonction du potentiel de gonflement de ladite variété. Le gonflement est fonction au moins en partie de trois paramètres principaux que sont la température de gélatinisation de la variété, le format du grain de riz et la teneur en amylose du grain de riz.

Il existe un besoin pour perfectionner encore les cuiseurs afin notamment d'adapter au mieux le cycle hydro-thermique aux propriétés organoleptiques recherchées.

L'invention vise à perfectionner encore les cuiseurs, notamment à riz, et a pour objet, selon un premier de ses aspects, un cuiseur comportant :
- une enceinte de cuisson d'un aliment en graines, notamment de riz,
- une enceinte d'analyse, distincte de l'enceinte de cuisson, pour recevoir un échantillon de l'aliment,
- des moyens d'analyse, encore appelés moyens de mesure, d'au moins une propriété de l'aliment reçu dans l'enceinte d'analyse.

Une mesure est effectuée grâce à l'invention sur un échantillon de l'aliment dans l'enceinte d'analyse. La présence de cette dernière facilite la mise en œuvre de la mesure, car l'enceinte d'analyse peut être spécialement adaptée à la mesure à effectuer. Les moyens d'analyse fournissent au moins une information utile pour la cuisson de l'aliment, afin d'approcher au mieux les propriétés recherchées en fin de cuisson.

Le cas échéant, l'enceinte de cuisson est utilisée pour effectuer également une mesure additionnelle d'une propriété de l'aliment. Par exemple, on peut mesurer une grandeur relative au gonflement de l'aliment dans l'enceinte de cuisson, pendant une phase de trempage de l'aliment, et d'autre part procéder à un autre type de mesure dans l'enceinte d'analyse. L'aliment peut alors être disposé à sec, sans eau, dans cette enceinte d'analyse, voire être en présence d'un réactif destiné à permettre la mesure d'une propriété particulière.

Par exemple, les moyens d'analyse sont configurés pour mesurer au moins une caractéristique de l'aliment relative à la force de gonflement lors du trempage, au taux de gonflement lors du trempage, à la vitesse de gonflement lors du trempage, à la teneur en eau de l'aliment, à la fermeté des graines, à la teneur en amylose, à la teneur en protéines, à la température de gélatinisation et/ou à une caractéristique géométrique des grains de riz, notamment la forme et les dimensions.

La mesure de la force de gonflement, de la vitesse de gonflement et/ou du taux de gonflement peut se faire dans l'enceinte d'analyse, en présence de l'échantillon de l'aliment et d'eau.

L'invention peut permettre grâce à l'analyse effectuée, de déterminer au moins une propriété de l'aliment, par exemple une grandeur relative au gonflement de l'aliment, au sein du cuiseur, sans faire appel à un instrument de mesure extérieur.

La mesure effectuée permet de renseigner l'appareil et/ou l'utilisateur sur certains paramètres de l'aliment et d'adapter le cycle hydro-thermique de cuisson à celui-ci, en vue de maximiser par exemple ses potentiels nutritionnel et/ou sensoriel. La mesure peut être effectuée de façon automatique avant chaque cuisson, ce qui suppose que l'utilisateur place un échantillon de l'aliment à chaque fois dans l'enceinte d'analyse, ou être effectuée seulement sur demande de l'utilisateur, par exemple à l'occasion de la première cuisson suivant l'ouverture d'une nouvelle boîte ou sachet de l'aliment.

L'utilisateur peut bénéficier, grâce à la mesure effectuée par le cuiseur, d'un itinéraire de cuisson pour chaque aliment, adapté à l'obtention d'une propriété recherchée pour celui-ci, par exemple une texture particulière.

L'invention permet aussi de rendre moins utile une étape d'identification par l'utilisateur de la variété de l'aliment préalablement à son introduction dans l'appareil, puisque l'appareil peut être capable, grâce à la mesure effectuée, de déterminer au moins certains paramètres de celui-ci de lui-même. L'utilisateur peut bénéficier, grâce à la mesure effectuée par le cuiseur, d'un itinéraire de cuisson pour chaque aliment adapté à l'obtention d'une propriété recherchée pour celui-ci, par exemple une texture particulière.

L'invention permet aussi de rendre moins utile une étape d'identification par l'utilisateur de la variété de l'aliment préalablement à son introduction dans l'appareil, puisque l'appareil peut être capable, grâce à la mesure effectuée, de déterminer au moins certains paramètres de celui-ci de lui-même.

L'invention présente également un intérêt lorsque la variété de riz est connue de l'utilisateur et du cuiseur, ayant par exemple été renseignée par celui ou ayant déjà fait l'objet d'une mesure lors d'une cuisson antérieure.

Dans ce cas, la mesure par les moyens d'analyse par exemple de la force de gonflement, du taux de gonflement et/ou de la vitesse de gonflement peut permettre de savoir si le riz est toujours frais, bon à cuire et a été stocké correctement, ou au contraire a séché et va présenter des défauts de cuisson.

Le cuiseur peut ainsi être agencé pour comparer le résultat de la mesure avec des données de référence pour une variété de riz précédemment utilisée ou connue, notamment signalée comme variété favorite, et en fonction du résultat de la comparaison avertir l'utilisateur sur la mauvaise qualité du riz introduit. L'utilisateur peut ainsi être prévenu que le riz utilisé risque de ne pas procurer les résultats sensoriels ou nutritionnels attendus.

Le terme « cuiseur » englobe ici tous les cuiseurs à riz (« rice-cooker » en anglais), les multi-cuiseurs, les autocuiseurs, les cuiseurs-vapeur et les mijoteurs.

De préférence, l'enceinte d'analyse est de volume nettement inférieur à celui de l'enceinte de cuisson ; par exemple le ratio entre le volume de l'enceinte d'analyse et celui de l'enceinte de cuisson est compris entre 1/200 et 1/5, de préférence entre 1/100 et 1/10, mieux entre 1/30 et 1/10. Ainsi, l'analyse peut s'effectuer sur une quantité réduite de l'aliment, ce qui limite les pertes.

De préférence, l'enceinte de cuisson et l'enceinte d'analyse ne communiquent pas, c'est-à-dire qu'un liquide se trouvant dans l'enceinte d'analyse ne peut jamais gagner l'enceinte de cuisson. Le cuiseur peut comporter une séparation complète entre l'enceinte d'analyse et l'enceinte de cuisson pour éviter tout risque de contamination de l'enceinte de cuisson par le contenu de l'enceinte d'analyse.

De préférence, le cuiseur dispose d'une régulation automatique de la chauffe, de façon à contrôler la température dans l'enceinte de cuisson.

Le cuiseur peut également comporter un élément de chauffage de l'enceinte d'analyse et une boucle de régulation de la température dans celle-ci.

En particulier, le cuiseur peut être agencé pour que la mesure d'une grandeur relative au gonflement de l'aliment soit effectuée alors que la température dans l'enceinte d'analyse est maintenue à une température prédéfinie, de préférence supérieure ou égale à 70°C pour du riz, par exemple égale à 75°C, voire supérieure, pouvant atteindre par exemple 95°C. En effet, la cinétique d'absorption d'eau par le riz est dépendante de la température, et le fait d'effectuer la mesure à une température supérieure ou égale à 70°C, par exemple égale à 75°C, permet de faire apparaître en un temps relativement court des différences significatives pour le taux de gonflement entre certaines variétés de riz, et donc de les discriminer.

L'information délivrée par les moyens d'analyse peut être traitée par un système informatique externe au cuiseur, avec lequel celui-ci échange des données. Il s'agit par exemple d'une tablette, d'un appareil téléphonique intelligent, d'un ordinateur dédié à la cuisine, ou d'un serveur distant avec lequel le cuiseur peut échanger des données ; l'accès à ce serveur s'effectue par exemple par le réseau Internet. L'avantage d'un traitement externe au moins partiel des données est de bénéficier de la puissance de calcul d'un système informatique qui n'est pas dédié à cette application. Dans une variante, l'information est traitée par un système informatique interne au cuiseur, celui-ci comportant par exemple un circuit de contrôle à microprocesseur.

Le traitement de l'information peut se faire en accédant à une base de données permettant d'associer une information délivrée par les moyens d'analyse, par exemple relative à une force de gonflement, à un taux de gonflement et/ou à une vitesse de gonflement de l'aliment, à une variété de celui-ci ou à une classe présentant sensiblement les mêmes propriétés. Cette base de données peut être interne au cuiseur, étant stockée dans une mémoire de celui-ci, ou externe au cuiseur, étant présente par exemple sur un serveur avec lequel le cuiseur peut communiquer, par exemple par une liaison Internet.

Le cuiseur peut être agencé pour sélectionner ou proposer à l'utilisateur, en fonction de l'information précitée, un cycle hydro-thermique adapté à la variété d'aliment, et le cas échéant, à une propriété recherchée pour l'aliment au terme de la cuisson, concernant par exemple la texture de l'aliment. Le cuiseur est de préférence agencé pour permettre à l'utilisateur de modifier s'il le souhaite certains paramètres du cycle proposé, en fonction par exemple de la texture recherchée. Par exemple, le cuiseur dispose de données qui le renseignent pour chaque variété de riz répertoriée par le cuiseur sur des propriétés, notamment de texture, qu'il est possible d'atteindre en fonction de différents paramètres du cycle hydro-thermique, tels que par exemple la durée de trempage, la durée de cuisson, la température de cuisson, le ratio eau/riz, la gestion de la pression lors de la cuisson, ou la quantité de riz introduite. Le cuiseur ayant déterminé la variété de riz ou la classe à laquelle l'aliment introduit s'apparente, il lui est possible d'ajuster automatiquement des paramètres du cycle hydro-thermique de façon à obtenir des propriétés pour l'aliment qui répondent le mieux à des préférences entrées par l'utilisateur, par exemple concernant la texture du riz, notamment la fermeté, le collant, la brillance, l'adhésivité, l'élasticité, ou la cohésion, entre autres paramètres de texture recherchés.

Le choix d'un cycle hydro-thermique particulier adapté à la variété d'aliment introduite dans le cuiseur permet d'optimiser la qualité de cuisson et de maximiser ses potentiels nutritionnel et sensoriel, et d'obtenir par exemple la texture souhaitée par l'utilisateur.

Le cycle hydro-thermique proposé ou sélectionné par le cuiseur en fonction de la nature de l'aliment est par exemple choisi parmi plusieurs cycle prédéfinis dont les paramètres sont figés ; par exemple, le cuiseur dispose de plusieurs programmes de cuisson à des températures respectives différentes, et l'un des programmes est choisi en fonction de la nature de l'aliment telle que déterminée par analyse. En variante, le cycle-hydro-thermique préprogrammé au sein du cuiseur comporte un ou plusieurs paramètres qui sont des variables, et dont les valeurs sont déterminées à partir au moins de l'information découlant de la mesure en appliquant une ou plusieurs règles de calcul. Cela peut permettre d'ajuster plus finement le cycle hydro-thermique à l'aliment. Par exemple, le cuiseur dispose d'un programme de cuisson à une température T qui est une fonction du taux de gonflement T_{g}, soit T = f(T_{g}), avec f qui est une fonction continue de la variable T_{g} par exemple. En fonction du taux de gonflement mesuré pour l'aliment, la température T est ajustée. Le programme de cuisson peut avantageusement faire intervenir pour chaque variété plusieurs variables que sont la température de trempage, le ratio eau/riz initial et la durée de trempage. La connaissance du comportement au trempage de la variété de riz introduite peut permettre de renseigner le cuiseur sur le modèle prédictif à utiliser pour prédire les propriétés sensorielles du riz au terme de la cuisson. Connaissant le modèle, le cuiseur peut, en fonction des propriétés recherchées par l'utilisateur, par exemple en termes de texture, adapter les différents paramètres du cycle hydro-thermique de façon à adapter au mieux celui-ci à l'obtention de ces propriétés recherchées.

Le cuiseur peut être agencé pour permettre à l'utilisateur de sélectionner au moins un paramètre de texture recherché pour l'aliment, notamment un degré de fermeté et/ou de collant en fin de cuisson, et le cuiseur peut être agencé également pour piloter un système de chauffe de l'enceinte recevant l'aliment au moins en fonction d'une part de ladite information déterminée à l'aide des moyens de mesure et d'autre part du ou des paramètres de texture entrés par l'utilisateur, afin de se rapprocher au terme de la cuisson de la texture souhaitée par l'utilisateur.

Les moyens d'analyse peuvent être réalisés sous diverses formes, en fonction par exemple de la précision recherchée et du coût admissible pour les réaliser compte tenu du prix final visé. Les moyens de mesure peuvent reposer sur une mesure optique, acoustique, magnétique, électrique et/ou électromécanique, entre autres possibilités.

Par « taux de gonflement », on désigne une grandeur représentative du gonflement relatif de l'aliment au cours du trempage, c'est-à-dire le volume occupé par l'aliment après gonflement, rapporté au volume de l'aliment avant gonflement.

Par « vitesse de gonflement », on désigne une grandeur représentative de la variation au cours du temps du volume de l'aliment.

Par « force de gonflement » on désigne la force de dilatation exercée par l'aliment lors de son gonflement.

Les moyens d'analyse opèrent de préférence seulement lorsque le cuiseur est refermé, c'est-à-dire que le couvercle a été rabattu et enclenché dans sa position de cuisson.

La mesure du taux de gonflement et/ou de la vitesse de gonflement de l'aliment peut s'effectuer directement sur l'aliment, en détectant par exemple une variation de niveau de la surface de l'aliment au cours du trempage.

Dans une variante, la mesure s'effectue de façon indirecte, en déterminant par exemple un volume d'eau absorbé par l'aliment au cours du trempage.

Les moyens d'analyse peuvent être disposés à divers emplacements du cuiseur, et sont par exemple déportés au moins partiellement, voire entièrement, dans un couvercle du cuiseur. Dans ce cas, les moyens d'analyse peuvent comporter un capteur qui fait face à la surface de l'aliment présent dans l'enceinte. Ce capteur est par exemple solidaire du couvercle du cuiseur. Le capteur est avantageusement protégé, lorsqu'il est optique, par un hublot, par exemple en verre ou en tout autre matériau adapté, par exemple du silicium.

Dans une variante, les moyens d'analyse comportent un élément immergé au moins partiellement dans l'aliment au cours du trempage.

Les moyens d'analyse optiques peuvent être adaptés à détecter une variation du niveau de la surface de l'aliment, ou préférentiellement d'un élément cible disposé à la surface de l'aliment, qui accompagne le déplacement de la surface de celui-ci lors du gonflement.

Les moyens d'analyse optiques peuvent encore être adaptés à détecter une variation du niveau de l'eau de trempage, notamment lorsque la grandeur représentative du gonflement correspond à une quantité d'eau absorbée qui est mesurée. La connaissance du niveau d'eau de trempage dans l'enceinte d'analyse peut être utile pour introduire de façon dosée de l'eau permettant de compenser la quantité absorbée par l'aliment.

L'élément cible précité peut agir comme un réflecteur de lumière et faciliter l'action des moyens d'analyse optiques. Par exemple, l'élément cible présente une meilleure réflectivité que l'aliment lui-même, et ainsi faciliter la réflexion d'un faisceau lumineux, notamment un faisceau collimaté.

L'élément cible est de préférence centré dans l'enceinte d'analyse. A cet effet, l'élément cible peut notamment occuper toute la section intérieure de l'enceinte d'analyse.

L'enceinte d'analyse peut être définie au moins partiellement par un pot amovible, reçu dans un logement situé par exemple à côté de la cuve définissant l'enceinte de cuisson.

Les moyens d'analyse peuvent être disposés à divers emplacement du cuiseur, et sont par exemple déportés dans un couvercle du cuiseur. Dans ce cas, les moyens d'analyse peuvent comporter un capteur qui fait face à la surface de l'aliment présent dans l'enceinte d'analyse. Ce capteur est par exemple solidaire du couvercle du cuiseur. Le capteur est avantageusement protégé, lorsqu'il est optique, par un hublot, par exemple en verre ou en silicium.

Dans une variante où l'échantillon de l'aliment est placé dans l'enceinte d'analyse avec de l'eau, les moyens d'analyse peuvent comporter un élément immergé au moins partiellement dans l'aliment au cours du trempage.

Les moyens d'analyse, lorsqu'ils procèdent à l'aide d'une mesure optique, peuvent être adaptés à détecter une variation du niveau de la surface de l'aliment, ou mieux d'un élément cible disposé à la surface de l'aliment, qui accompagne le déplacement de la surface de celui-ci lors du gonflement. Les moyens d'analyse optiques peuvent encore être adaptés à détecter une variation du niveau de l'eau de trempage, notamment lorsque la grandeur représentative du gonflement correspond à une quantité d'eau absorbée qui est mesurée. La connaissance du niveau d'eau de trempage peut être utile pour introduire de façon dosée de l'eau permettant de compenser la quantité absorbée par l'aliment.

L'élément cible peut agir comme un réflecteur de lumière et faciliter l'action d'un capteur optique. Par exemple, l'élément cible peut présenter une meilleure réflectivité que l'aliment lui-même, et ainsi faciliter la réflexion d'un faisceau lumineux collimaté.

Lorsque la détection est non optique, par exemple acoustique, magnétique ou capacitive, les moyens d'analyse peuvent être sensibles à la position occupée par l'élément cible, du fait par exemple du matériau en lequel cet élément est réalisé.

Dans un exemple de réalisation, les moyens d'analyse comportent un capteur optique, par exemple un capteur infrarouge, notamment dans le proche infrarouge, de façon à être moins sensible au niveau de l'eau de trempage et/ou au verre d'un hublot de protection du capteur par exemple.

Les moyens d'analyse optiques opèrent par exemple par triangulation, et comportent une source lumineuse, de préférence infrarouge, qui projette un faisceau collimaté sur la surface, et un capteur sensible à l'orientation du faisceau réfléchi.

Dans une variante de réalisation, les moyens d'analyse comportent un capteur magnétique, par exemple un capteur à effet Hall ou un capteur inductif, ou un capteur capacitif.

Dans ce cas notamment, les moyens d'analyse peuvent comporter un palpeur dirigé vers l'aliment, et qui prend par exemple appui sur la surface de celui-ci.

Ce palpeur est mobile relativement à un détecteur qui est pourvu d'un circuit de détection de la position du palpeur relativement au détecteur ; par exemple, le palpeur comporte une tige qui s'engage plus ou moins dans le détecteur et la détection de la position de la tige s'effectue au sein du détecteur par exemple par voie capacitive ou inductive.

De préférence, le palpeur est réalisé avec à son extrémité une tête qui lui permet de reposer sur l'aliment sans s'enfoncer outre mesure dans celui-ci. Cette tête peut être constituée par un flasque orienté perpendiculairement à la tige.

De préférence, le palpeur est amovible, c'est-à-dire qu'il peut être désengagé du détecteur, de façon à faciliter son nettoyage.

Les moyens d'analyse peuvent encore comporter un détecteur qui est immergé avec l'aliment dans l'enceinte d'analyse. Ce détecteur repose par exemple par une extrémité dans le fond de l'enceinte d'analyse, et il est agencé pour détecter le niveau de l'aliment dans l'enceinte, par exemple grâce à un capteur optique ou électrique ou à un élément mobile qui suit l'évolution du niveau de la surface de l'aliment, cet élément mobile étant par exemple de forme annulaire engagé sur le détecteur. Le détecteur peut comporter au moins deux électrodes effectuant une mesure de conductivité, mieux une pluralité d'électrodes réparties le long du détecteur de façon à détecter l'étendue de la surface de celui-ci qui est immergée dans l'eau et/ou l'aliment.

Le détecteur des moyens d'analyse, notamment lorsqu'il est disposé dans l'enceinte avec l'aliment, peut être agencé pour transmettre ses informations par une liaison sans fil à un récepteur intégré au cuiseur ou extérieur à celui-ci.

Le détecteur peut se fixer, le cas échéant, de façon amovible dans ou sur l'enceinte d'analyse, par exemple sur le fond de celle-ci. Cela peut permettre de le maintenir avec une orientation prédéfinie dans l'enceinte, par exemple verticale, et améliorer la précision de la mesure. Par exemple, le détecteur comporte un aimant qui contribue à l'immobiliser dans l'enceinte d'analyse pendant la phase de trempage au moins.

Dans une variante, le détecteur s'étend depuis le fond de l'enceinte d'analyse, de préférence verticalement, de façon non amovible.

Les moyens d'analyse peuvent encore comporter un texturomètre pour mesurer la force de gonflement.

Le cuiseur peut disposer d'une interface homme machine comportant un afficheur qui permet d'afficher au moins une information liée à la mesure effectuée dans l'enceinte d'analyse, par exemple liée à une grandeur représentative de la force de gonflement, du taux de gonflement et/ou de la vitesse de gonflement.

L'interface peut afficher des paramètres d'un cycle hydro-thermique proposé à l'utilisateur, en fonction notamment de la variété identifiée, et le cas échéant, de préférences entrées par l'utilisateur, par exemple concernant la texture souhaitée.

L'interface peut être agencée pour permettre à l'utilisateur d'activer ou non les moyens d'analyse et/ou d'entrer des préférences concernant le résultat recherché en fin de cuisson, par exemple de texture.

L'interface peut également être utilisée pour enregistrer une variété en tant que favorite, afin de mémoriser des données correspondantes, et par exemple les réutiliser lors d'une nouvelle cuisson de cette variété, par exemple dans le but de retrouver une même texture.

L'interface peut également être agencée pour permettre de contrôler le fonctionnement du cuiseur et d'ajuster par exemple certains paramètres du cycle hydro-thermique.

L'invention a encore pour objet un procédé de mesure d'une grandeur représentative de la force de gonflement, du taux de gonflement et/ou de la vitesse de gonflement d'un aliment présent dans une enceinte d'analyse d'un cuiseur, distincte de l'enceinte de cuisson, dans lequel on détecte pendant une étape de trempage de l'aliment dans cette enceinte d'analyse, une force de gonflement et/ou une variation du niveau de l'aliment et/ou de l'eau de trempage dans l'enceinte et l'on détermine une information représentative dudit taux ou de ladite vitesse sur la base au moins de la variation ainsi détectée.

Dans un exemple de mise en œuvre, la variation du niveau de l'aliment pendant la phase de trempage dans l'enceinte d'analyse est utilisée pour déterminer la variété de l'aliment ou une classe de variétés similaires en termes de gonflement au trempage.

Dans une variante, la mesure du niveau de l'eau de trempage est utilisée pour déterminer la variété de l'aliment ou une variété similaire en termes de gonflement au trempage, en mesurant par ailleurs une quantité d'eau introduite dans l'enceinte d'analyse contenant l'aliment pendant le trempage, cette introduction s'effectuant de façon contrôlée et dosée en fonction d'une détection d'une variation du niveau de l'eau de trempage.

Comme mentionné plus haut, l'information précitée peut être traitée au moins en partie par un système informatique externe au cuiseur, avec lequel celui-ci échange des données.

La mesure peut être répétée alors que l'aliment est présent dans l'enceinte d'analyse du cuiseur, notamment de façon à disposer d'une cinétique de gonflement. La connaissance de la cinétique de gonflement peut procurer des données supplémentaires pour discriminer plus finement des variétés entre elles.

L'aliment peut être le riz et dans ce cas notamment le trempage est de préférence effectué à une température supérieure ou égale à 70°C, par exemple égale à 75°C.

Une fois les mesures effectuées, un message correspondant peut être délivré à l'utilisateur.

Le cuiseur peut être réalisé de telle sorte que l'utilisateur puisse entrer grâce à l'interface utilisateur précitée au moins un paramètre de texture recherché, par exemple relatif à la fermeté ou au collant souhaité, et déterminer de façon automatique les réglages à effectuer connaissant la variété de riz et le ratio eau/ riz initial pour obtenir le résultat recherché, en s'aidant pour cela de modèles prédictifs des propriétés sensorielles atteignables pour chaque variété en fonction de la température de trempage, de la durée de trempage et du ratio eau/riz initial, par exemple.

Les mesures effectuées peuvent servir uniquement à discriminer plusieurs variétés entre elles, en fonction d'adapter la cuisson au mieux, comme expliqué ci-dessus. Les mesures effectuées peuvent encore être suivies par la génération de données additionnelles destinées à informer l'utilisateur sur des propriétés de l'aliment, par exemple au moins une propriété physico-chimique de celui-ci, par exemple le taux d'amylose, la teneur en protéines, la température de gélatinisation et/ou une caractéristique géométrique des grains de l'aliment, par exemple la forme ou une dimension, ces données étant déterminées sur la base de ladite information, voire le cas échéant par des mesures additionnelles résultant par exemple de la présence d'un autre appareil de mesure au sein du cuiseur. Ces données additionnelles sont si on le souhaite communiquées à l'utilisateur, par exemple en étant affichées sur l'interface homme machine du cuiseur, ou affichées sur un terminal communiquant par une liaison sans fil avec le cuiseur.

L'invention a encore pour objet, selon un autre de ses aspects, un procédé de cuisson d'un aliment à l'aide d'un cuiseur selon l'invention, tel que défini ci-dessus, dans lequel un programme de cuisson de l'aliment est déterminé et/ou proposé à l'utilisateur et/ou rendu sélectionnable par l'utilisateur en fonction au moins de l'information provenant des moyens d'analyse, par exemple représentative de la force de gonflement, de la vitesse de gonflement et/ou du taux de gonflement de l'aliment, notamment par comparaison de cette information à des données de référence. Cette comparaison permet le cas échéant de déterminer également au moins une propriété physico-chimique de l'aliment, notamment le taux d'amylose, la teneur en protéines et/ou la température de gélatinisation.

Dans un tel procédé de cuisson, l'utilisateur peut être invité à entrer au moins une valeur d'un paramètre de texture souhaité en fin de cuisson, et le programme de cuisson peut être déterminé au moins en fonction d'une part de la valeur souhaitée et d'autre part de ladite information.

L'utilisateur peut être invité à entrer au moins une préférence en termes de pouvoir nutritionnel et/ou de durée du programme de cuisson et le programme de cuisson peut être déterminé au moins en fonction d'une part de la valeur souhaitée et d'autre part de ladite information.

L'invention a encore pour objet un procédé pour identifier un aliment présent dans un cuiseur, notamment un cuiseur tel que défini ci-dessus, dans lequel pendant une première phase d'identification de l'aliment dans l'enceinte d'analyse, on observe la force de gonflement, le taux de gonflement et/ou la vitesse de gonflement lors du trempage à une température T comprise entre 70 et 77°C, par exemple entre 70 et 75°C, et l'on compare cette force de gonflement, ce taux de gonflement et/ou cette cinétique de gonflement à des données de référence, pour générer sur la base au moins de cette comparaison une indication relative à l'identité de l'aliment, notamment la variété de riz ou l'appartenance à une classe d'aliments présentant des propriétés similaires en termes de gonflement au cours du trempage.

Ce procédé peut comporter une deuxième phase d'identification après modification de température de trempage, notamment entre 85° et 95°C.

En effet, certaines variétés de riz ne présentent pas de gonflement sensible avant qu'une température de trempage prédéfinie ne soit atteinte ; le fait d'élever la température de l'eau et de détecter un effet de la température sur le gonflement à partir d'une certaine température seulement, peut permettre de discriminer certaines variétés.

Le procédé peut également comporter l'étape consistant à comparer le résultat de la mesure avec des données de référence concernant un aliment précédemment utilisé et enregistré comme aliment favori dans le cuiseur, et en fonction du résultat de la comparaison avertir l'utilisateur sur la qualité de l'aliment introduit.

L'invention pourra être mieux comprise à la lecture de la description détaillée qui va suivre, d'exemples non limitatifs de mise en œuvre de celle-ci, et à l'examen du dessin annexé, sur lequel :
- la figure 1 représente un exemple de cuiseur selon l'invention, couvercle ouvert,
- la figure 2 est une coupe axiale schématique du cuiseur de la figure 1,
- la figure 3 représente de façon schématique des moyens d'analyse comportant un texturomètre,
- les figures 4A à 4D sont des vues analogues à la figure 3 de variantes de moyens d'analyse,
- la figure 5 est un schéma en blocs d'un exemple de circuit de contrôle d'un cuiseur selon l'invention,
- la figure 6 illustre un exemple de traitement de données fournies par les moyens de mesure, et
- la figure 7 illustre l'évolution en fonction du temps de la hauteur du lit de riz pendant le trempage à 75°C, pour deux variétés de riz.

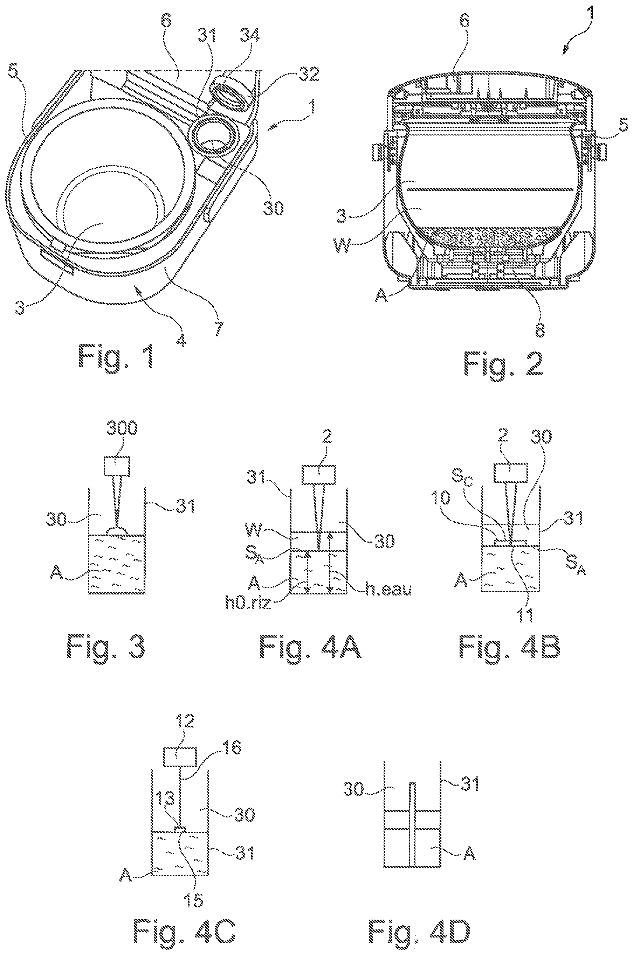

On a représenté aux figures 1 et 2 un cuiseur 1 selon l'invention, comportant un boîtier 4 comprenant une partie de base 7 et un couvercle 6 articulé sur cette partie de base 7.

Le boîtier 4 loge au sein de la partie de base 7 une cuve 5 définissant une enceinte de cuisson 3, dans laquelle l'aliment à cuire A, en l'espèce du riz, est introduit avec de l'eau W. La cuve 5 est de préférence amovible, pour permettre de la nettoyer. Elle peut être revêtue intérieurement d'un revêtement anti-adhérent.

Le cuiseur 1 comporte, de façon connue en soi, un système électrique 8 pour chauffer la cuve 5, commandé par un circuit de contrôle électronique qui est par exemple intégré au moins partiellement au couvercle 6.

Le système électrique 8 comporte une ou plusieurs résistances électriques chauffantes.

Le cuiseur 1 est prévu pour se raccorder à une prise de courant, à l'aide d'un cordon non représenté.

Le cuiseur 1 comporte une enceinte d'analyse 30 distincte de l'enceinte de cuisson 3, dans laquelle est introduite un échantillon de l'aliment A à des fins de mesure d'au moins l'une de ses propriétés, et notamment d'identification.

L'enceinte d'analyse 30 peut notamment être disposée dans la partie de base 7 du boîtier 4 à côté de la cuve 5, et par exemple à proximité d'une charnière par laquelle le couvercle 6 est articulé sur la partie de base 7.

L'enceinte d'analyse 30 est par exemple définie par un pot 31 qui peut être fermé par un bouchon 32 porté par le couvercle 6 lorsque ce dernier est rabattu sur la partie de base 7.

Le volume du pot 31 est inférieur à celui de la cuve 5. De préférence, le pot 31 est reçu tout comme la cuve 5 de manière amovible dans un logement de la partie de base 7, de façon à faciliter son nettoyage et son vidage.

Conformément à l'invention, des moyens d'analyse sont prévus pour mesurer au moins une propriété de l'aliment disposé dans l'enceinte d'analyse 30.

On utilise par exemple un texturomètre 300, comme illustré à la figure 3, permettant de connaître la force de gonflement du riz lors du trempage. Des variétés différentes de riz présentent des forces de trempage différentes avec le temps, et en observant la force de trempage et en la comparant avec des données de référence on peut ainsi discriminer entre des variétés.

Les moyens d'analyse peuvent encore être utilisés pour mesurer une grandeur représentative du taux de gonflement et/ou de la vitesse de gonflement de l'aliment placé dans le pot 31. Dans ce cas, l'échantillon est introduit avec de l'eau de façon à réaliser un trempage, et le pot 31 peut être chauffé à une température accélérant le gonflement de l'aliment A.

Lors du trempage, qui s'effectue de préférence à une température prédéfinie, par exemple à 70°C environ, l'aliment A tend à absorber de l'eau et gonfler, ce gonflement étant plus ou moins important en fonction des variétés de l'aliment et pouvant également dépendre de la température. Le gonflement peut s'accompagner, au sein de l'aliment, de réactions chimiques telles qu'une hydratation ou une gélatinisation.

Comme illustré à la figure 4A, le pot 31 est rempli à l'instant to avec l'aliment A sur une hauteur initiale *h0.riz* et la hauteur initiale d'eau W vaut *h.eau,* étant supérieure à la hauteur initiale *h0.riz.*

De préférence, la hauteur initiale d'eau *h.eau* est choisie de telle sorte que la hauteur de l'eau reste supérieure ou égale à celle de l'aliment à la fin de l'étape de trempage.

Après gonflement, à l'instant t₁, la hauteur de l'aliment A est devenue *h1.riz.*

Les moyens d'analyse sont agencés dans l'exemple de la figure 4A pour délivrer une information représentative du taux de gonflement et/ou la vitesse de gonflement de l'aliment A dans l'enceinte 30, pendant l'étape de trempage.

Dans l'exemple de la figure 4A, ces moyens d'analyse comportent un capteur optique 2 qui est porté par le couvercle 6 et qui détecte à distance une variation du niveau de l'aliment A dans le pot 31.

Le capteur optique 2 est orienté de façon à faire face au fond de l'enceinte 30, Il peut être protégé des projections de liquide par un hublot transparent, par exemple en verre.

Le faisceau émis peut être un faisceau collimaté. La longueur d'onde de ce faisceau est choisie pour être compatible avec la présence d'eau au-dessus de l'aliment A et avec la traversée éventuelle d'un hublot de protection. De préférence, la longueur d'onde est dans l'infrarouge, mieux dans le proche infrarouge.

Le capteur optique 2 peut être un capteur optique agissant par triangulation, comportant un émetteur d'un faisceau de lumière avec un angle par rapport à la normale de la surface cible, et un détecteur pour déterminer l'angle du faisceau réfléchi par réflexion spéculaire. La distance du capteur à la surface cible est donnée par la connaissance de cet angle.

Le faisceau de lumière émis par le capteur optique 2 peut être un faisceau de lumière infrarouge, et l'émetteur peut être une DEL infrarouge, mieux une diode laser.

Le capteur optique 2 peut encore être à mesure confocale par codage chromatique. Dans ce cas, un système optique crée au sein du capteur 2 une aberration chromatique contrôlée qui éclate une lumière blanche en un continuum de longueurs d'ondes monochromatiques dans le sens de la longueur de l'axe optique. Ces différentes longueurs d'onde sont focalisées à des distances différentes. Le capteur comporte un détecteur qui reconnaît la longueur d'onde qui se focalise exactement sur la surface cible, correspondant à une distance bien précise.

Les moyens d'analyse peuvent être sans élément mobile. En variante, les moyens d'analyse comportent un élément mobile, par exemple afin de déplacer une optique dans le but de focaliser un faisceau sur la surface de l'aliment, la détection d'une variation de niveau de l'aliment s'effectuant d'après le déplacement nécessaire à la re-focalisation. Dans l'exemple de la figure 4A, le capteur optique 2 permet de détecter la variation du niveau de la surface S_{A} de l'aliment au cours du trempage.

Par exemple, une mesure initiale du niveau de la surface S_{A} est effectuée à un instant t₀ après fermeture du couvercle 6 et lancement par l'utilisateur d'un programme d'analyse de l'aliment, ce programme comportant une phase de trempage. Au moins une autre mesure est effectuée à un instant t₁, après une durée prédéfinie.

Le taux de gonflement T_{g}(t₁) à l'instant t₁ peut être déterminé par le calcul de la quantité (hi.riz - h_{0.riz})/h_{0.riz}.

Il peut être avantageux d'effectuer une succession de mesures du niveau de la surface de l'aliment A au cours du temps lors de l'étape de trempage, de façon à connaître l'évolution de la vitesse de gonflement de l'aliment A au cours du temps et l'historique de l'absorption d'eau par l'aliment, car plusieurs variétés de l'aliment A peuvent avoir des cinétiques de gonflement différentes, comme détaillé plus loin en prenant l'exemple du riz. La connaissance de la cinétique de gonflement de la variété introduite dans l'enceinte de cuisson peut permettre de reconnaître plus facilement une variété, en comparant la cinétique observée avec des cinétiques de référence précédemment mesurées pour des variétés connues.

De façon à faciliter la mesure du gonflement de l'aliment A, le cuiseur 1 peut comporter un élément cible qui est placé à la surface de l'aliment A dans l'enceinte d'analyse 30, de façon à suivre le niveau de la surface de l'élément quand l'aliment A gonfle.

On a représenté à la figure 4B une enceinte d'analyse 30 comportant un tel élément 10, servant de cible pour le capteur optique 2.

L'élément 10 présente une densité qui lui évite de flotter dans l'eau contenue dans l'enceinte 30, et qui l'amène à reposer contre la surface S_{A} de l'aliment, comme illustré sur la figure 4B.

La surface supérieure de l'élément 10 sert de surface réfléchissante S_{C} au capteur optique 2, et présente par exemple une réflectivité élevée, de façon à faciliter la réflexion spéculaire mise en œuvre dans le cas d'une mesure par triangulation par exemple.

De préférence, l'élément 10 est réalisé en métal, par exemple en acier inoxydable. Une grandeur représentative du taux de gonflement de l'aliment A à un instant t est déterminée par la mesure du déplacement de l'élément 10 à cet instant au cours du trempage. Il en est de même pour l'acquisition de la vitesse de gonflement.

La surface cible S_{C} de l'élément 10 peut être immergée dans l'eau, y compris en fin de trempage. En variante, l'élément 10 est réalisé avec une hauteur suffisante pour lui permettre de rester émergé au cours de la phase de trempage, ce qui peut limiter les perturbations liées à la réfraction à l'interface entre l'eau et l'air.

Dans les exemples des figures 4A et 4B, le suivi du gonflement de l'aliment A s'effectue de façon directe, par une mesure du niveau de la surface S_{A} de celui-ci ou d'une surface cible S_{C} posée sur l'aliment A et se déplaçant avec lui.

Il est encore possible de déterminer une grandeur représentative du gonflement de l'aliment de manière indirecte, en mesurant une grandeur autre que le niveau de la surface S_{A} ou S_{C}. En particulier, le cuiseur 1 peut être agencé pour mesurer la quantité d'eau absorbée par l'aliment au cours de la phase de trempage, et qui provoque son gonflement. Le taux de gonflement est ainsi lié à la quantité d'eau absorbée, et il en est de même pour la vitesse de gonflement.

Un volume d'eau initial *V0.eau* est ajouté dans l'enceinte d'analyse 30 au début de l'étape de trempage à to de telle sorte que la hauteur initiale de l'eau soit égale à la hauteur initiale *h0.riz* de l'aliment A.

Ensuite, de l'eau est rajoutée au fur et à mesure de l'étape de trempage, pour compenser la quantité absorbée, et conserver un niveau d'eau égal à celui de l'aliment A.

A la fin de l'étape de trempage, l'eau introduite n'est plus absorbée par l'aliment et la quantité d'eau ajoutée est représentative du gonflement de l'aliment.

Dans cet exemple, le cuiseur 1 est réalisé de façon à pouvoir ajouter de l'eau dans le pot 31 à partir d'une réserve d'eau non représentée.

Cette réserve est par exemple disposée dans le couvercle 6 et l'eau s'écoule de façon dosée dans la cuve 5, par exemple en traversant un débitmètre, l'écoulement de l'eau étant commandé de façon automatique par exemple par une électrovanne.

En variante, la réserve d'eau est logée dans la partie de base 7 du boîtier 4, et le cuiseur 1 comporte une pompe doseuse pour amener une quantité dosée d'eau dans la cuve 5, par exemple une pompe péristaltique.

On peut réaliser l'introduction dosée de l'eau en utilisant un élément cible 10 placé sur l'aliment A. On peut par exemple détecter le moment où l'élément 10 émerge de l'eau, grâce à une mesure optique. Par exemple, les moyens de mesure projettent sur l'élément 10 un faisceau focalisé, qui se réfléchit sur un détecteur en l'absence d'eau. La présence d'eau recouvrant l'élément 10 modifie la réflexion du faisceau, en raison de la réfraction liée à l'eau, et le détecteur peut détecter cette variation dans la lumière réfléchie liée à la présence ou non d'eau recouvrant l'élément 10.

Les moyens d'analyse peuvent être agencés pour détecter le moment où le niveau d'eau dans le pot 31 dépasse celui de l'élément 10, et le cuiseur 1 peut comporter une boucle de contrôle qui déclenche et arrête le remplissage de façon à maintenir le niveau d'eau à affleurement de la surface cible de l'élément 10 au cours du temps.

La connaissance de la quantité d'eau ajoutée au cours du temps renseigne sur la vitesse de gonflement.

On va maintenant décrire en référence à la figure 4C une variante de réalisation du cuiseur 1 dans laquelle les moyens de détection comportent un capteur comportant un palpeur 13 relié mécaniquement à un détecteur 12 porté par le couvercle 6, de telle sorte qu'un déplacement du palpeur 13 soit détecté par le détecteur 12.

Le palpeur 13 comporte par exemple une tête 15 en forme de flasque suffisamment large pour reposer sur la surface de l'aliment A sans s'enfoncer dedans, et une tige 16 qui est engagée dans le détecteur 12.

Lorsque le palpeur 13 se déplace pour accompagner le gonflement de l'aliment A, la tige 16 s'enfonce plus ou moins dans le détecteur 12, et ce dernier peut être agencé pour délivrer un signal représentatif du déplacement de la tige 16 lorsque cette dernière remonte, ce déplacement étant lié au gonflement de l'aliment A.

La détection de la remontée de la tige 16 au sein du détecteur 12 s'effectue par exemple de manière inductive, capacitive ou optique.

Par exemple, la tige 16 porte un aimant et le détecteur 12 comporte un capteur à effet Hall, sensible au champ magnétique produit par cet aimant.

En variante, le détecteur 12 comporte une bobine, par exemple coaxiale à la tige 16, et cette dernière se comporte comme un noyau magnétique introduit plus ou moins dans la bobine selon son axe ; il en résulte une variation de l'inductance de la bobine, qui peut être exploitée pour délivrer un signal représentatif de l'enfoncement de la tige 16 dans le détecteur 12.

En variante encore, le détecteur 12 comporte au moins une électrode générant un champ électrique avec lequel la tige interfère par effet capacitif ; la modification de la capacitance est détectée et convertie en un signal représentatif de l'enfoncement de la tige au sein du détecteur 12.

Le palpeur 13 peut encore déplacer au sein du détecteur 12 un potentiomètre, par exemple linéaire ou rotatif.

Le palpeur peut reposer par son poids contre l'aliment A ; en variante, un ressort de rappel contribue à presser le palpeur contre l'aliment A. Cela peut aider à tasser l'aliment A sous le palpeur et améliorer la précision de la mesure. Le palpeur 13 peut être relié de façon indémontable au détecteur 12, c'est-à-dire que l'utilisateur ne peut enlever sans utiliser d'outil le palpeur 13 ; de préférence, le palpeur 13 est relié de façon amovible au détecteur 12, c'est-à-dire que l'utilisateur peut l'enlever quand le couvercle 6 est ouvert, par exemple pour le nettoyer.

De préférence, le palpeur 13 est retenu suffisamment sur le détecteur 12 pour que l'utilisateur puisse le mettre en place et refermer le couvercle 6 ensuite sans que le palpeur 13 ne se désengage du détecteur 12 une fois que le couvercle 6 est fermé.

Le cas échéant, la tige 16 peut dépasser le dessus du couvercle 6 en remontant, grâce à une ouverture correspondante ménagée dans celui-ci.

Dans une variante non illustrée, les moyens d'analyse comportent un palpeur qui n'est déployé dans l'enceinte d'analyse que lorsque le couvercle est fermé. Par exemple, le cuiseur 1 est agencé pour détecter la fermeture du couvercle 6, et actionner alors un mécanisme qui libère un palpeur d'une configuration rétractée à une configuration déployée. Lorsque l'utilisateur souhaite ouvrir le couvercle, le palpeur est ramené en position rétractée avant le déverrouillage d'un verrou autorisant l'ouverture du couvercle.

Les moyens d'analyse peuvent encore, comme illustré à la figure 4D, être complètement amovibles et disposés dans l'enceinte 30 lorsque l'aliment A y est présent.

Les moyens d'analyse se présentent par exemple sous la forme d'un élément formant détecteur 22, de forme allongée qui est plongé dans l'aliment, et de préférence orienté verticalement.

Dans ce cas, le résultat de la mesure peut être transmis à un circuit de contrôle du cuiseur par une liaison sans fil, par exemple BLE (« Bluetooth Low Energy ») ou à un terminal situé à proximité, extérieur au cuiseur 1, avec lequel celui-ci communique.

Les moyens d'analyse peuvent comporter un capteur optique, capacitif, inductif ou autre, sensible à la hauteur de l'aliment et/ou de l'eau dans laquelle l'aliment trempe.

De préférence, l'élément 22 vient en appui contre le fond du pot 31. Il peut être adapté à détecter un tel appui.

L'élément 22 peut être utilisé pour mesurer directement le gonflement de l'aliment, ou en variante pour réaliser une mesure indirecte du gonflement via la mesure de la quantité d'eau absorbée, comme décrit plus haut.

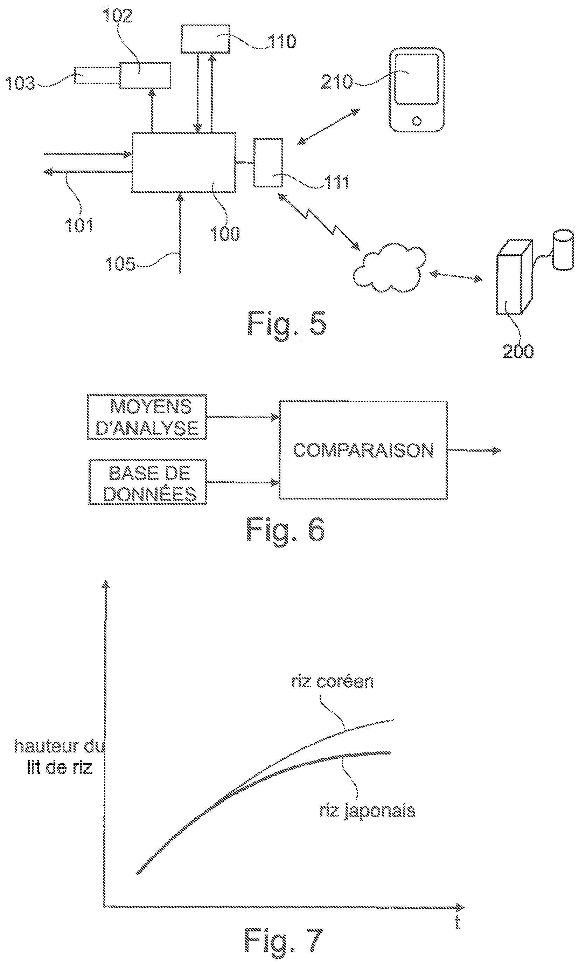

On a représenté à la figure 5 de façon schématique un exemple de circuit de contrôle 100 du cuiseur 1. Ce circuit de contrôle 100 communique par exemple par une liaison bidirectionnelle 101 avec les moyens d'analyse.

Le circuit de contrôle 100 est par exemple à base de microprocesseur ou de microordinateur.

Une interface de puissance 102 est pilotée par le circuit de contrôle 100 en fonction de la puissance de chauffe devant être fournie par une ou plusieurs résistances électriques 103 du système électrique 8 précité, placé sous la cuve 5.

Le circuit de contrôle 100 peut recevoir des signaux 105 provenant de capteurs de température afin de réguler précisément la température de la cuve 5 autour d'une valeur de consigne, laquelle peut évoluer dans le temps, et notamment au cours de la phase de trempage et de la phase de cuisson.

Le cuiseur 1 comporte une interface homme machine 110 qui est reliée au circuit de contrôle 100 et qui comporte par exemple un afficheur tactile et/ou un ou plusieurs voyants et/ou boutons.

De préférence, le cuiseur 1 est connecté, c'est-à-dire qu'il peut communiquer grâce à une interface adaptée 111 avec un serveur distant 200 via Internet, et/ou avec un terminal 210 tel qu'un téléphone intelligent ou une tablette, par exemple par une liaison Bluetooth ou Wifi.

On a illustré à la figure 6 le traitement des données provenant des moyens d'analyse. Sur cette figure les données résultant de la ou des mesures effectuées sur l'aliment A sont référencés 220. Il s'agit par exemple de la mesure d'une grandeur représentative du gonflement de l'aliment A au cours du trempage, et/ou d'une mesure d'un spectre d'absorption par le spectromètre 300 précité.

Ces données 220 sont comparées à des données de référence 230 provenant d'une base de données 240.

Par exemple, la base de données 240 répertorie un ensemble de valeurs de variation de la hauteur du lit de riz en fonction du temps à une température de trempage prédéfinie, pour diverses variétés de riz, tel qu'illustré à la figure 7.

Sur cette figure on a représenté l'évolution de la hauteur du lit de riz à 75°C pour les variétés de riz japonais moyen et coréen moyen.

Le riz coréen ne présente pas une cinétique identique à celle du riz japonais, alors qu'ils ont des températures de pic de gélatinisation proches, ce qui permet de les différencier lors du trempage.

Si le gonflement du riz est faible ou inexistant, on peut en conclure que sa température de pic de gélatinisation est supérieure à 75°C. Dans ce cas, une seconde analyse de comportement à une température plus élevée, par exemple à 95°C, peut permettre de caractériser plus finement la variété.

La teneur en amylose initiale du grain a un effet défavorisant sur l'absorption d'eau par le grain. L'étude du gonflement du riz au cours du temps, pour différentes températures, notamment à 75°C et à 95°C, peut renseigner sur la teneur en amylose de la variété présente dans le cuiseur 1.

On comprend qu'en comparant l'historique d'évolution du gonflement de l'aliment A contenu dans le cuiseur 1 avec ces courbes de référence, on peut déterminer de quelle variété l'aliment A est la plus proche, et ainsi identifier la variété de l'aliment de façon automatique.

Le traitement des données 220 peut s'effectuer de façon totalement interne au cuiseur 1, la base de données 240 étant intégrée à celui-ci.

En variante, l'analyse des données 220 se fait au moins partiellement à l'extérieur du cuiseur 1, par exemple au sein du terminal 210, après avoir téléchargé une application correspondante, ou au sein du serveur distant 200.

Cela peut permettre de bénéficier d'une puissance de calcul plus importante, le cas échéant.

Une fois la variété de l'aliment A identifiée, ou la classe d'aliments dont le comportement est similaire, ainsi le cas échéant que d'autres propriétés de celui-ci, l'utilisateur peut se voir proposer un ou plusieurs programmes de cuisson, conduisant par exemple à des textures différentes, à des apports nutritionnels différents ou optimisant la durée du cycle hydro-thermique, ces programmes étant adaptés à la variété présente dans le cuiseur 1.

Le cuiseur 1 peut ainsi comporter dans une mémoire des paramètres permettant de générer plusieurs cycles hydro-thermiques en fonction de plusieurs variétés de l'aliment et/ou de propriétés recherchées, notamment gustatives et/ou nutritionnelles. L'interface 110 peut afficher diverses informations permettant à l'utilisateur de sélectionner une ou plusieurs propriétés recherchées en fin de cuisson. Le circuit de contrôle 100 commande alors le cycle hydro-thermique le plus adapté à l'obtention des propriétés recherchées, par exemple grâce à des modèles prédisant l'évolution d'au moins une propriété de l'aliment en fonction de la variété de celui-ci et d'un ou plusieurs paramètres du cycle hydro-thermique, par exemple la durée de trempage, le ratio eau/riz initial, la durée de cuisson, et l'évolution de la température au cours du trempage et/ou de la cuisson.

Le cuiseur peut comporter ou avoir accès à des modèles de cycle hydro-thermique fonction de la nature du riz, de sa forme, des propriétés gustatives et/ou de valeur nutritionnelle souhaitées.

Le cuiseur peut optimiser certains paramètres en fonction du résultat recherché par l'utilisateur, par exemple la teneur glycémique ou la durée du cycle hydro-thermique.

Bien entendu, l'invention n'est pas limitée aux exemples qui viennent d'être décrits.

Par exemple, l'invention peut s'appliquer à d'autres aliments que le riz.

## Revendications

1. Cuiseur (1) comportant :
- une enceinte (3) de cuisson d'un aliment (A) en graines, notamment de riz,
- une enceinte d'analyse (30), distincte de l'enceinte de cuisson, pour recevoir un échantillon de l'aliment,
- des moyens d'analyse d'au moins une propriété de l'aliment reçu dans l'enceinte d'analyse, **caractérisé par le fait que** l'enceinte d'analyse est de volume inférieur à celui de l'enceinte de cuisson.

2. Cuiseur selon la revendication 1, les moyens d'analyse étant configurés pour mesurer au moins une caractéristique de l'aliment relative à la force de gonflement lors du trempage, au taux de gonflement lors du trempage, à la vitesse de gonflement lors du trempage, à la teneur en eau de l'aliment, à la fermeté des graines, à la teneur en amylose, à la teneur en protéines, à la température de gélatinisation et/ou à une caractéristique géométrique des grains de riz, notamment la forme et les dimensions.

3. Cuiseur selon l'une des revendications 1 et 2, le ratio entre le volume de l'enceinte d'analyse et celui de l'enceinte de cuisson étant compris entre 1/200 et 1/5, de préférence entre 1/100 et 1/10, mieux entre 1/30 et 1/10.

4. Cuiseur selon l'une quelconque des revendications précédentes, étant agencé pour qu'une mesure d'une grandeur relative au gonflement de l'aliment soit effectuée alors que la température dans l'enceinte d'analyse est maintenue à une température prédéfinie, de préférence supérieure ou égale à 70°C pour du riz, notamment égale à 75°C, voire supérieure, pouvant atteindre notamment 95°C.

5. Cuiseur selon l'une quelconque des revendications précédentes, les moyens d'analyse reposant sur une mesure optique, acoustique, magnétique, électrique et/ou électromécanique.

6. Cuiseur selon l'une quelconque des revendications précédentes, étant agencé pour sélectionner ou proposer à l'utilisateur, en fonction au moins d'une information délivrée par les moyens d'analyse, un cycle hydro-thermique adapté à la variété d'aliment.

7. Cuiseur selon l'une quelconque des revendications précédentes, les moyens d'analyse étant configurés pour effectuer une mesure du taux de gonflement ou de la vitesse de gonflement de l'aliment contenu dans l'enceinte d'analyse avec de l'eau, directement sur celui-ci, en détectant une variation de niveau de la surface de l'aliment au cours du trempage.

8. Cuiseur selon l'une quelconque des revendications précédentes, dans lequel au moins un paramètre d'un programme de cuisson de l'aliment est déterminé automatiquement à partir au moins d'une information délivrée par les moyens d'analyse.

9. Cuiseur selon l'une quelconque des revendications précédentes, disposant d'une interface homme machine (110) comportant un afficheur qui permet d'afficher au moins une information liée à l'analyse effectuée par les moyens d'analyse, notamment la variété de riz, et de préférence des paramètres d'un cycle hydro-thermique proposé à l'utilisateur, en fonction notamment de la variété identifiée, et le cas échéant, de préférences entrées par l'utilisateur, notamment concernant la texture souhaitée.

10. Cuiseur selon l'une quelconque des revendications 1 à 9, étant agencé pour permettre à l'utilisateur de sélectionner au moins un paramètre de texture recherché pour l'aliment, notamment un degré de fermeté et/ou de collant en fin de cuisson, et le cuiseur étant agencé également pour piloter un système de chauffe de l'enceinte recevant l'aliment au moins en fonction d'une part de ladite information déterminée à l'aide des moyens d'analyse et d'autre part du ou des paramètres de texture entrés par l'utilisateur, afin de se rapprocher au terme de la cuisson de la texture souhaitée par l'utilisateur.

11. Procédé d'analyse d'au moins une propriété d'un aliment, ladite propriété est analysée alors qu'un échantillon de l'aliment est présent dans une enceinte d'analyse (30) d'un cuiseur, notamment un cuiseur à riz, disposant d'une enceinte de cuisson distincte de l'enceinte d'analyse, **caractérisé par le fait que** l'enceinte d'analyse étant de volume inférieur à celui de l'enceinte de cuisson.

12. Procédé selon la revendication 11, le ratio entre le volume de l'enceinte d'analyse et celui de l'enceinte de cuisson étant compris entre 1/200 et 1/5, de préférence entre 1/100 et 1/10, mieux entre 1/30 et 1/10.

13. Procédé selon la revendication 12, dans lequel l'on détermine au moins sur la base d'une information délivrée par les moyens d'analyse une propriété physico-chimique de l'aliment, notamment le taux d'amylose, la teneur en protéines, la température de gélatinisation et/ou une caractéristique géométrique des grains de riz, notamment la forme et les dimensions.

14. Procédé de cuisson d'un aliment à l'aide d'un cuiseur selon l'une quelconque des revendications 1 à 11, dans lequel un programme de cuisson de l'aliment est déterminé et/ou proposé à l'utilisateur et/ou rendu sélectionnable par l'utilisateur en fonction au moins d'une information délivrée par les moyens d'analyse, notamment par comparaison de cette information à des données de référence permettant de déterminer au moins une propriété physico-chimique de l'aliment, notamment le taux d'amylose, la teneur en protéines et/ou la température de gélatinisation.

15. Procédé pour identifier un aliment présent dans l'enceinte d'analyse d'un cuiseur tel que défini dans l'une quelconque des revendications 1 à 11, dans lequel pendant une première phase d'identification, on observe la force de gonflement, le taux de gonflement et/ou la vitesse de gonflement lors du trempage de l'aliment à une température T comprise entre 70 et 75°C et l'on compare ce taux de gonflement et/ou cette cinétique de gonflement à des données de référence pour générer sur la base au moins de cette comparaison une indication relative à l'identité de l'aliment, notamment la variété de riz.

## Patentansprüche

1. Gargerät (1), das umfasst:
- einen Einschluss (3) zum Garen eines körnigen Nahrungsmittels (A), insbesondere von Reis,
- einen Analyseeinschluss (30), der von dem Gareinschluss getrennt ist, um eine Probe des Nahrungsmittels aufzunehmen,
- Mittel zur Analyse mindestens einer Eigenschaft des Nahrungsmittels, das in dem Analyseeinschluss aufgenommen ist, **gekennzeichnet durch** die Tatsache, dass der Analyseeinschluss ein Volumen, das kleiner ist als das des Gareinschlusses, aufweist.

2. Gargerät nach Anspruch 1, wobei die Analysemittel dazu konfiguriert sind, mindestens ein Merkmal des Nahrungsmittels in Zusammenhang mit der Quellkraft beim Einweichen, der Quellrate beim Einweichen, der Quellgeschwindigkeit beim Einweichen, dem Wassergehalt des Nahrungsmittels, der Festigkeit der Körner, dem Amylosegehalt, dem Gehalt an Proteinen, der Gelatinierungstemperatur und/oder eines geometrischen Merkmals der Reiskörner, insbesondere der Form und der Maße, zu messen.

3. Gargerät nach einem der Ansprüche 1 und 2, wobei das Verhältnis zwischen dem Volumen des Analyseeinschlusses und dem des Gareinschlusses zwischen 1/200 und 1/5, bevorzugt zwischen 1/100 und 1/10, besser zwischen 1/30 und 1/10 liegt.

4. Gargerät nach einem der vorstehenden Ansprüche, das dazu eingerichtet ist, damit eine Messung einer Größe in Zusammenhang mit dem Quellen des Nahrungsmittels ausgeführt wird, während die Temperatur in dem Analyseeinschluss an einer vordefinierten Temperatur gehalten wird, die bevorzugt größer oder gleich 70 °C für Reis, insbesondere gleich 75 °C, ja sogar größer ist und insbesondere 95 °C erreichen kann.

5. Gargerät nach einem der vorstehenden Ansprüche, wobei die Analysemittel auf einer optischen, akustischen, magnetischen, elektrischen und/oder elektromechanischen Messung beruhen.

6. Gargerät nach einem der vorstehenden Ansprüche, das dazu eingerichtet ist, in Abhängigkeit von mindestens einer Information, die von den Analysemitteln geliefert wird, einen hydrothermischen Zyklus, der an die Nahrungsmittelsorte angepasst ist, auszuwählen oder dem Benutzer vorzuschlagen.

7. Gargerät nach einem der vorstehenden Ansprüche, wobei die Analysemittel dazu konfiguriert sind, eine Messung der Quellrate oder der Quellgeschwindigkeit des Nahrungsmittels, das in dem Analyseeinschluss mit dem Wasser enthalten ist, direkt auf diesem auszuführen, indem eine Niveauvariation der Oberfläche des Nahrungsmittels während des Einweichens erfasst wird.

8. Gargerät nach einem der vorstehenden Ansprüche, wobei mindestens ein Parameter eines Garprogramms des Nahrungsmittels automatisch ausgehend von mindestens einer Information, die von den Analysemitteln geliefert wird, bestimmt wird.

9. Gargerät nach einem der vorstehenden Ansprüche, das über eine Mensch-Maschine-Schnittstelle (110) verfügt, die einen Anzeiger umfasst, der das Anzeigen mindestens einer Information in Zusammenhang mit der Analyse, die von den Analysemitteln ausgeführt wurde, insbesondere der Reissorte und bevorzugt der Parameter eines hydrothermischen Zyklus, der dem Benutzer, insbesondere in Abhängigkeit von der identifizierten Sorte vorgeschlagen wird, und, gegebenenfalls, von Einstellungen, die von dem Benutzer insbesondere in Zusammenhang mit der gewünschten Textur eingegeben werden, erlaubt.

10. Gargerät nach einem der Ansprüche 1 bis 9, das dazu eingerichtet ist, es dem Benutzer zu erlauben, mindestens einen Texturparameter, der für das Nahrungsmittel angestrebt wird, auszuwählen, insbesondere einen Festigkeitsgrad und/oder Klebrigkeitsgrad am Garende, und wobei das Gargerät auch dazu eingerichtet ist, ein Heizsystem des Einschlusses, der das Nahrungsmittel aufnimmt, mindestens in Abhängigkeit einerseits von der Information, die mit Hilfe der Analysemittel bestimmt wird, und andererseits des oder der Texturparameter, die von dem Benutzer eingegeben werden, zu steuern, um sich am Ende des Garens der von dem Benutzer gewünschten Textur zu nähern.

11. Analyseverfahren mindestens einer Eigenschaft eines Nahrungsmittels, wobei die Eigenschaft analysiert wird, während eine Probe des Nahrungsmittels in einem Analyseeinschluss (30) eines Gargeräts anwesend ist, insbesondere eines Reiskochers, der über einen Gareinschluss verfügt, der von dem Analyseeinschluss getrennt ist, **gekennzeichnet durch** die Tatsache, dass der Analyseeinschluss ein Volumen, das kleiner ist als das des Gareinschlusses, aufweist.

12. Verfahren nach Anspruch 11, wobei das Verhältnis zwischen dem Volumen des Analyseeinschlusses und dem des Gareinschlusses zwischen 1/200 und 1/5, bevorzugt zwischen 1/100 und 1/10, besser zwischen 1/30 und 1/10 liegt.

13. Verfahren nach Anspruch 12, wobei mindestens auf der Basis einer Information, die von den Analysemitteln geliefert wird, eine physisch-chemische Eigenschaft des Nahrungsmittels, insbesondere des Amylosegehalts, des Gehalts an Proteinen, der Gelatinierungstemperatur und/oder eines geometrischen Merkmals der Reiskörner insbesondere der Form und der Maße, bestimmt wird.

14. Garverfahren eines Nahrungsmittels mit Hilfe eines Gargeräts nach einem der Ansprüche 1 bis 11, wobei ein Garprogramm des Nahrungsmittels in Abhängigkeit von mindestens einer Information, die von den Analysemitteln geliefert wird, insbesondere durch Vergleichen dieser Information mit Bezugsdaten, die es erlauben, mindestens eine physisch-chemische Eigenschaft des Nahrungsmittels, insbesondere des Amylosegehalts, des Gehalts an Proteinen und/oder der Gelatinierungstemperatur zu bestimmen, bestimmt und/oder dem Benutzer vorgeschlagen und/oder für den Benutzer auswählbar gemacht wird.

15. Verfahren zum Identifizieren eines Nahrungsmittels, das in dem Analyseeinschluss eines Gargeräts, wie in einem der Ansprüche 1 bis 11 definiert, anwesend ist, wobei während einer ersten Identifikationsphase die Quellkraft, die Quellrate und/oder die Quellgeschwindigkeit bei dem Einweichen des Nahrungsmittels bei einer Temperatur T zwischen 70 und 75 °C beobachtet wird, und diese Quellrate und/oder diese Quellkinetik mit Bezugsdaten verglichen wird, um auf der Basis mindestens dieses Vergleichs einen Hinweis auf die Identität des Nahrungsmittels, insbesondere der Reissorte, zu erzeugen.

## Claims

1. Cooker (1) comprising:
- a chamber (3) for cooking a grain-based foodstuff (A), in particular rice,
- an analysis chamber (30), distinct from the cooking chamber, for receiving a sample of the foodstuff,
- means for analysing at least one property of the foodstuff received in the analysis chamber, **characterised by** the fact that the analysis chamber is of a volume less than that of the cooking chamber.

2. Cooker according to claim 1, the means for analysing being configured to measure at least one characteristic of the foodstuff relative to the swelling force during soaking, to the swelling rate during soaking, to the swelling speed during soaking, to the water content of the foodstuff, to the firmness of the grains, to the amylose content, to the protein content, to the gelatinization temperature and/or to a geometrical characteristic of the grains of rice, in particular the shape and the dimensions.

3. Cooker according to one of claims 1 and 2, the ratio between the volume of the analysis chamber and that of the cooking chamber being comprised between 1/200 and 1/5, preferably between 1/100 and 1/10, more preferably between 1/30 and 1/10.

4. Cooker according to any one of the preceding claims, being arranged so that a measurement of a magnitude relative to the swelling of the foodstuff is taken while the temperature in the analysis chamber is maintained at a predefined temperature, preferably greater than or equal to 70°C for rice, in particular equal to 75°C, or even higher, able to reach in particular 95°C.

5. Cooker according to any one of the preceding claims, the means for analysing based on an optical, acoustic, magnetic, electrical and/or electromechanical measurement.

6. Cooker according to any one of the preceding claims, being arranged to select or suggest to the user, according to at least one piece of information delivered by the means for analysing, a hydro-thermal cycle adapted to the variety of the foodstuff.

7. Cooker according to any one of the preceding claims, the means for analysing being configured to take a measurement of the swelling rate or of the swelling speed of the foodstuff contained in the analysis chamber with water, directly on the latter, by detecting a variation on the level of the surface of the foodstuff during soaking.

8. Cooker according to any one of the preceding claims, wherein at least one parameter of a cooking programme of the foodstuff is automatically determined using at least one piece of information delivered by the means for analysing.

9. Cooker according to any one of the preceding claims, having a man-machine interface (110) including a display that makes it possible to display at least one piece of information linked to the analysis conducted by the means for analysing, in particular the variety of the rice, and more preferably parameters of a hydro-thermal cycle suggested to the user, according in particular to the variety identified, and where applicable, more preferably entered by the user, in particular concerning the desired texture.

10. Cooker according to any one of claims 1 to 9, being arranged to allow the user to select at least one texture parameter sought for the foodstuff, in particular a degree of firmness and/or of stickiness at the end of cooking, and the cooker also being arranged to manage a system for heating the chamber receiving the foodstuff at least according to on the one hand said information determined using the means for analysing and on the other hand according to one or several texture parameters entered by the user, so as to approach at the end of the cooking the texture desired by the user.

11. Method for analysing at least one property of a foodstuff, said property being analysed while a sample of the foodstuff is present in an analysis chamber (30) of a cooker, in particular a rice cooker, having a cooking chamber distinct from the analysis chamber, **characterised by** the fact that the analysis chamber is of a volume less than that of the cooking chamber.

12. Method according to claim 11, the ratio between the volume of the analysis chamber and that of the cooking chamber being comprised between 1/200 and 1/5, preferably between 1/100 and 1/10, more preferably between 1/30 and 1/10.

13. Method according to claim 12, wherein, at least on the basis of a piece of information delivered by the means for analysing, a physical-chemical property of the foodstuff is determined, in particular the amylose content, the protein content, the gelatinization temperature and/or a geometrical characteristic of the grains of rice, in particular the shape and the dimensions.

14. Method of cooking a foodstuff using a cooker according to any one of claims 1 to 11, wherein a cooking programme of the foodstuff is determined and/or suggested to the user and/or rendered selectable by the user according to at least one piece of information delivered by the means for analysing, in particular by comparing this information with reference data that makes it possible to determine at least one physical-chemical property of the foodstuff, in particular the amylose content, the protein content and/or the gelatinization temperature.

15. Method for identifying a foodstuff present in the analysis chamber of a cooker such as defined in any one of claims 1 to 11, wherein during a first phase of identification, the swelling force, the swelling rate and/or the swelling speed during soaking of the foodstuff at a temperature T comprised between 70 and 75°C are observed and this swelling rate and/or this swelling kinetics is compared with reference data in order to generate based on at least this comparison an indication relative to the identity of the foodstuff, in particular the variety of rice.
